# EUROPEAN PATENT SPECIFICATION

(11) **EP 1 223 058 B1**
(45) Date of publication and mention of the grant of the patent: **28.02.2007**
(21) Application number: 02000619.3
(22) Date of filing: 10.01.2002
(51) Int. Cl.: B60G 7/00

(54) **Suspension arm**
Aufhängungslenker
Bras de suspension

(30) Priority: 12.01.2001 JP 2001004928
(43) Date of publication of application: 17.07.2002
(73) Proprietor: HONDA GIKEN KOGYO KABUSHIKI KAISHA, Minato-ku Tokyo (JP)
(72) Inventor: Hirai, Hideki c/o Honda R & D Co., Ltd., Wako-shi, Saitama (JP)
(74) Representative: Liska, Horst

(56) References cited:
- EP-A- 0 733 499
- EP-A- 0 760 300
- JP-A- 8 188 022
- US-A- 3 195 914
- US-A- 4 986 566
- US-A- 5 607 177

## Description

### BACKGROUND OF THE INVENTION

### FIELD OF THE INVENTION

The present invention relates to a suspension arm for an automobile, which is made of a pressed metallic plate, as defined in the preamble part of claim 1.

### DESCRIPTION OF THE RELATED ART

Such a suspension arm is known from document EP-A-0 760 300. This document discloses to locate the one and only horizontal portion of the known suspension arm above a load acting plane without any relation to the remaining geometry of the known suspension arm. EP-A-0 760 300 does not mention or show a bending center for vertical bending or a second horizontal portion.

Fig. 15 of EP-A-0 760 300 shows a central horizontal portion of a suspension arm with a cross section of an inverted U-shape, wherein this central horizontal portion is located above a so-called "load acting plane", i.e. a plane in which forces acting upon the known suspension arm lie. The relation between this single horizontal portion of the known suspension arm and the load acting plane is the only geometrical relation revealed in this document in view of the vertical position of the single central horizontal portion.

In the following, further technical background and prior art is discussed:

It is known that a suspension arm for an automobile is made of a steel sheet, which is pressed in a crank fashion at peripheral edge portions thereof, thereby to provide overall a hat-like cross section. In order to make the supension, the material of the suspension arm is bent at a portion "a", and bent at a portion "b" in opposite direction to the portion "a". As a result, an easy press work is required. Moreover, the material of the suspension arm has a small elongation, so that the plate thickness of the material at the portion "b" is difficult to thin.

However, since the undersurface of the suspension arm is opened to decrease the rigidity, it easily happens to be deformed by loads. In order to avoid the problem, when the cross section of the suspension arm is enlarged or the thickness of the material is increasing, it happens the problem that the overall size of the suspension arm is enlarged or that the weight of the suspension arm is increased.

Thus, it is proposed in Japanese Patent Unexamined Publication No. 188022/1996 and Japanese Patent Unexamined Publication No. 318722/1996 that the reverse flanges are formed by bending peripheral edge portions of a steel sheet 180 degrees or over to thereby solve the problem.

Incidentally, in the suspension arms described in Japanese Patent Unexamined Publication No. 188022/1996 and Japanese Patent Unexamined Publication No. 318722/1996, since the reverse flanges are formed to bend the peripheral edge portions of the steel sheet 180 degrees or over, the elongation of the material at the reverse flange portion is greater than that of the suspension arm having the hat-like cross-section.

As a result, since the thickness of the material at the reverse flange portion is reduced, the strength at the portions where the thickness of the material is reduced when bending loads is generated at the reverse flanges.

### SUMMARY OF THE INVENTION

It is an object of the present invention to provide a suspension arm that is highly rigid and occupies as little space as possible.

This object is achieved by a suspension arm as defined in new claim 1.

According to the invention, the suspension arm in which the reverse flanges are formed by pressing peripheral edge portions of the metallic plate comprises :
a first horizontal wall portion extending substantially horizontally when attached to a vehicle body, perpendicular wall portions formed by bending downwardly peripheral edges of the first horizontal wall portion, reverse flanges formed by bending inwardly lower edges of the perpendicular wall portions, and a second horizontal wall portion projecting upwardly from the first horizontal wall portion.

By these provisions, the height of a bending center for vertical bending load is raised.by providing the second horizontal wall portion which projects upwardly from the first horizontal wall portion so that a distance from the bending center to the reverse flanges is increased, whereby tensile load and compressive load acting on the reverse flanges can be reduced, thereby making it possible to increase the durability of the reverse flanges even if the thickness of the material is reduced due to the large elongation thereof at the time of pressing the material to form the reverse flanges.

According to the invention, the suspension arm further additionally has a wheel mounting portion to which a wheel is mounted, a first vehicle body mounting portion provided transversely inwardly of the wheel mounting portion and a second vehicle body mounting portion provided at a position longitudinally apart from the first vehicle body mounting portion, the suspension arm further comprising said first horizontal wall portion in the vicinity of the first vehicle body mounting portion.

By these means, the height of a bending center for vertical bending load is raised by providing the second horizontal wall portion which projects upwardly from the first horizontal wall portion in the vicinity of the first vehicle body mounting portion to which the largest bending load is applied so that a distance from the bending center to the reverse flanges is increased, whereby tensile load and compressive load acting on the reverse flanges can be reduced, thereby making it possible to increase the durability of the reverse flanges even if the thickness of the material is reduced due to the large elongation thereof at the time of pressing the material to.form the reverse flanges.

According to the invention, the suspension arm further comprises a third horizontal wall portion projecting downwardly from a portion of the first horizontal wall portion where the second horizontal wall portion does not exist.

Since the third horizontal wall portion is provided in such a manner as to project downwardly from the first horizontal wall portion at the portion where the second horizontal wall portion does not exist, the bending center of the suspension arm is allowed to approach the thickness-wise center of the suspension arm so that the cross-sectional configuration of the suspension arm is not deformed by load acting within the plane of the suspension arm, whereby the occurrence of unfavorable secondary internal stress can be prevented.

### BRIEF DESCRIPTION OF THE DRAWINGS

Fig. 1 is a perspective view of a lower arm for a left front wheel of an automobile;
Fig. 2 is a view (a plan view of the lower arm) as seen in a direction indicated by an arrow 2 in Fig. 1;
Fig. 3 is a view (a front view of the lower arm) as seen in a direction indicated by an arrow 3 in Fig. 1;
Fig. 4 is an enlarged cross-sectional view taken along the line 4-4 in Fig. 2;
Fig. 5 is an enlarged cross-sectional view taken along the line 5-5 in Fig. 2;
Fig. 6 is an enlarged cross-sectional view taken along the line 6-6 in Fig. 2;
Fig. 7 is an enlarged cross-sectional view taken along the line 7-7 in Fig. 2;
Fig. 8 is an enlarged cross-sectional view taken along the line 8-8 in Fig. 2;
Fig. 9 is an enlarged cross-sectional view taken along the line 9-9 in Fig. 2; and
Fig. 10 is a cross-sectional view showing a conventional suspension arm having a hat-like cross section.

### DESCRIPTION OF THE PREFERRED EMBODIMENTS

The present invention will be described based on an embodiment of the invention illustrated in the drawings.

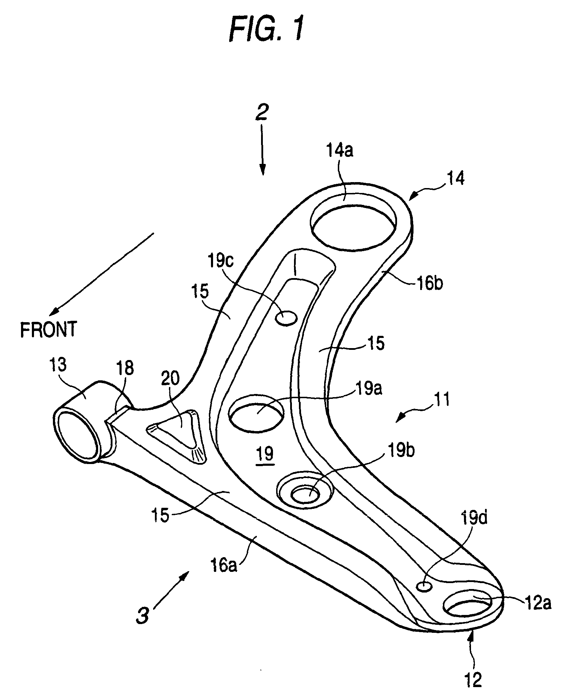

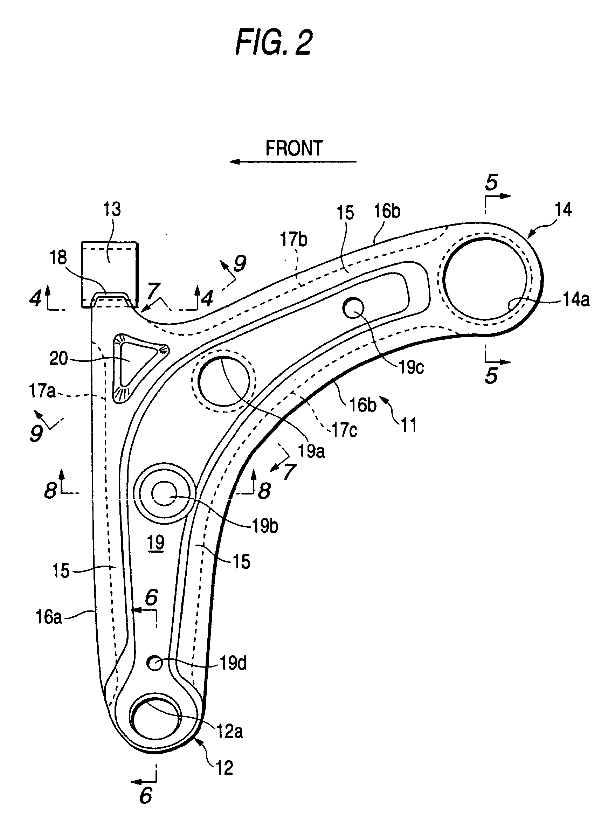

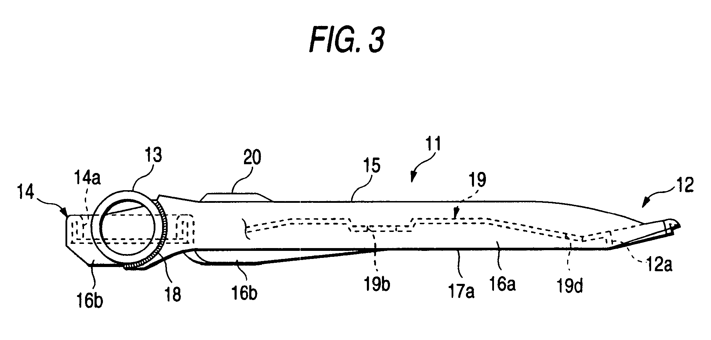

Figs. 1 to 3 shows a lower arm 11 of a suspension for supporting a left front wheel of an automobile. The lower arm 11 mainly includes a metallic plate such as a pressed steel plate. The planner configuration is a so-called A-type arm.

The lower arm 11 comprises:
a wheel mounting portion 12 for supporting a wheel via a knuckle,
a first front vehicle body mounting portion 13 supported by a vehicle body, which is positioned inward of the wheel mounting portion 12 in the direction of the width of the vehicle, and
a second vehicle body mounting portion 14 positioned rearward of the first vehicle body mounting portion 13 in the direction of the width of the vehicle.

The lower arm 11 comprises a first horizontal wall portion 15 which is extending substantially horizontally when attached to the vehicle body. Further, the first horizontal wall portion 15 connects the wheel mounting portion 12,the first vehicle body mounting portion 13 and the second vehicle body mounting portion 14 together.

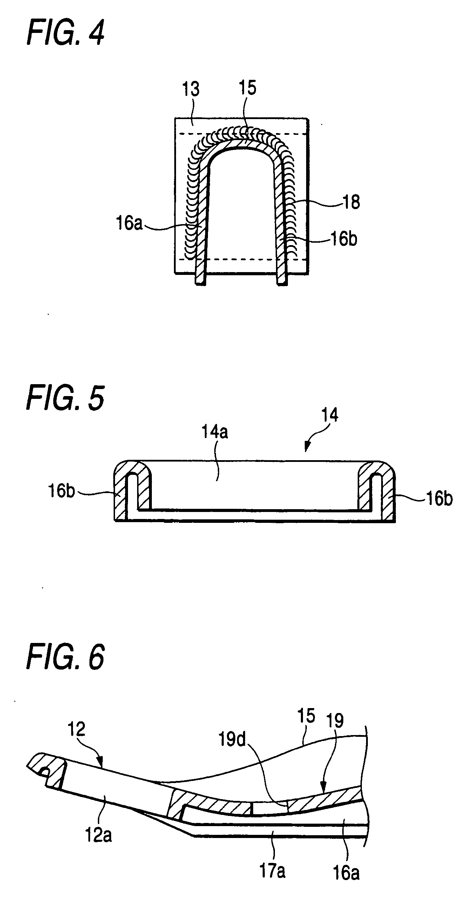

Referred to Figs. 4, 5, 7, 8 and 9 together, the lower arm 11 includes perpendicular wall portions 16a and 16b which is formed to bend peripheral edges of the first horizontal wall portion 15 downwardly.

The perpendicular wall portion 16b extends from the wheel mounting portion 12 to the first vehicle body mounting portion 13, and the perpendicular wall portion 16b extends from the wheel mounting portion 12 to the second vehicle body mounting portion 14.

Namely, the perpendicular wall portions 16a, 16b are not provided in the vicinity of the wheel mounting portion 12 and the first vehicle body mounting portion 13.

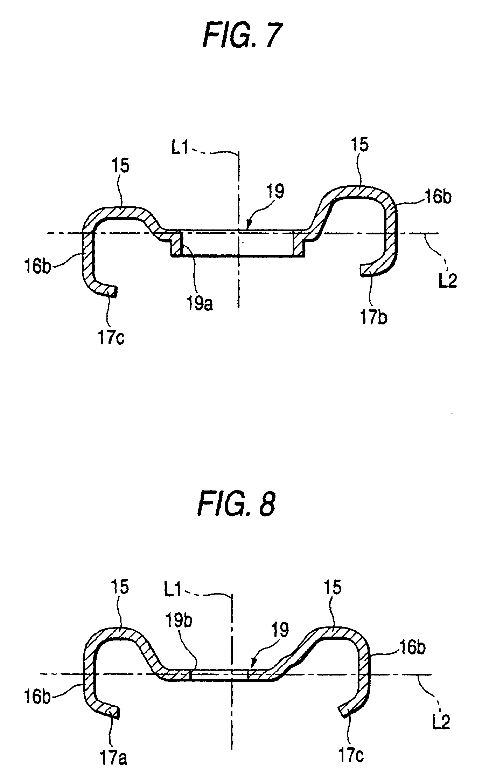

Referred to Figs. 7, 8 and 9 together, a reverse flange 17a is formed between the wheel mounting portion 12 and the first vehicle body mounting portion 13 to bend inwardly the perpendicular wall portion 16a, a reverse flange 17b is formed between the first vehicle body mounting portion 13 and the second vehicle body mounting portion 14 to bend inwardly the perpendicular wall portion 16b, and a reverse flange 17c is formed between the second vehicle body mounting portion 14 and the wheel mounting portion 12 to bend inwardly the perpendicular wall portion 16b.

Referred to Fig. 6 together, the wheel mounting portion 12 provides with a circular hole having a flange 12a which is bent downwardly, and a knuckle is pivotally supported therein via a ball joint.

Referred to Fig. 4 together, the first vehicle mounting portion 13 includes a separate member such as a pipe having a circular cross section.

By welding 18 with the axis of the pipe being oriented in the longitudinal direction of the vehicle body, the pipe is fixed to end portions of the first horizontal wall portion 15 and the perpendicular wall portions 16a, 16b, which form together an inverted U shape.

The first vehicle body mounting portion 13 is pivotally supported on the vehicle body via a rubber bush joint.

Referred to Fig. 5 together, the second vehicle body mounting portion 14 includes a circular hole having a flange 14a, which is bent downwardly. The second vehicle body mounting portion 14 is surrounded circumferentially substantially 180 degrees by the perpendicular wall portion 16b. The second vehicle body mounting portion 14 is pivotally supported on the vehicle body via a rubber bush joint.

Referred to Figs. 7 and 8, a third horizontal wall portion 19, which is curved in an arc-like fashion as viewed from the top, is formed at a central portion of the first horizontal wall portion 15 in such a manner be lowered.

The third horizontal wall portion 19 is positioned substantially in the middle between the first horizontal wall portion 15 and the reverse flanges 17a, 17b, 17c.

Then, the third horizontal wall portion 19 is continuously connected to the wheel mounting portion 12 without any difference height.

A working hole 19a (refer to Fig. 7) is formed in the third horizontal wall portion 19 at substantially central portion thereof in order to insert an impact wrench.

A stabilizer mounting hole 19b (refer to Fig. 8) is formed in the third horizontal wall portion 19 at a position in the vicinity of the working hole 19a on a side closer to the wheel mounting portion 12.

Water drain holes 19c, 19c are formed in the third horizontal wall portion 19 at positions closer to ends thereof.

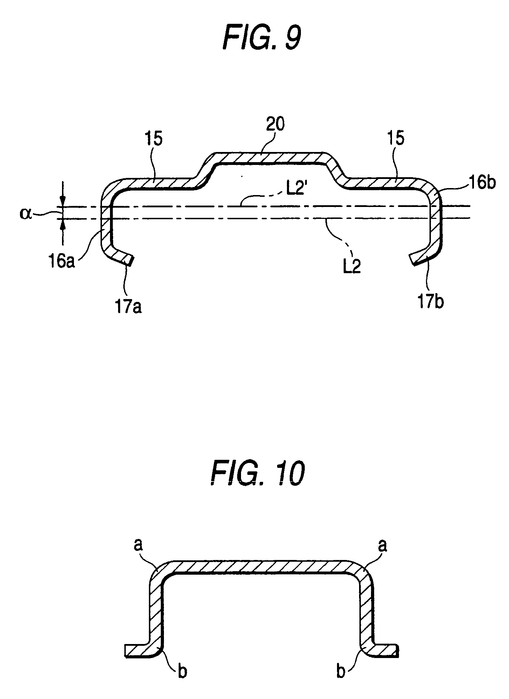

Referred to Fig. 9, a second horizontal wall portion 20, which is provided higher than the first horizontal wall portion 15, is formed on the first horizontal wall portion 15 at a position in the vicinity of the first vehicle body mounting portion 13 in place of the third horizontal wall portion 19.

Referred to Figs. 7 and 8, the cross-sectional configuration of the lower arm 11 is similar to the cross-sectional configuration of an I type steel by forming the third horizontal wall portion 19 lower than the first horizontal wall portion 15. Namely, the third horizontal wall portion 19 of the lower arm 11 corresponds to the web of an I type steel, and the first horizontal wall portion 15, the perpendicular wall portions 16a, 16b and the reverse flanges 17a, 17b, 17c correspond to the flanges of the I type steel. Therefore, the second moment of area with respect to an axis L1, which intersects with the third horizontal wall portion 19 at right angles, becomes extremely large.

A horizontal load acting within the plane of the lower arm 11 from the wheel via the wheel mounting portion 12 generates compressive load, tensile load and bending load in the horizontal portions of the lower arm 11. at that time, the bending load, which is the most important in terms of strength, becomes a bending load about the axis L1.- However, as described above, since the second moment of area with respect to an axis L1 is extremely large, the lower arm 11 has a sufficient rigidity to bear the bending load.

Moreover, since the lower arm 11 has the cross-sectional configuration which is axially symmetrical with respect to an axis L2 passing through the third horizontal wall portion 19,
the deformation of the cross section by the horizontal load is made difficult to take place, whereby unfavorable secondary internal stress can be prevented.

A vertical load of the wheel mounting portion 12, which is taken from the wheel, generates a bending load acting on a surface the lower arm 11 perpendicularly.

This bending load is a maximum at a cross section taken along the line 9-9 (referred to Fig. 9) in the vicinity of the first vehicle body mounting portion 13 of the lower arm 11.

As shown in Fig. 9, an axis L2' becomes a center of bending at the portion having the second horizontal wall portion 20 which projects upwardly from the first horizontal wall portion 15 of the lower arm 11. Therefore, The axis L2' is moved more upwardly by a distance α than the axis L2 that becomes a center of bending of the portion having the third horizontal wall portion 19 which projects downwardly from the first horizontal wall portion 15.

Incidentally, when a steel plate is pressed to form the lower arm 11, the first horizontal wall portion 15 is first bent downwardly to form the perpendicular wall portions 16a, 16b, and in turn the perpendicular wall portions 16a, 16c are bent to form the reverse flanges 17a, 17b, 17c. Therefore, when compared with the conventional example (refer to Fig. 10) in which the lower end of the perpendicular wall portion is bent outwardly to form the reverse flange, the elongation of the material becomes larger at the reverse flanges 17a, 17b, 17c. Moreover, the thickness at those portions becomes thinner and the strength thereat is less.

However, In the lower arm 11 of the invention, since the axis L2' as the center of bending is moved more upwardly by the distance α due to the formation of the second horizontal wall portion 20, a distance from the axis L2' to the reverse flanges 17a, 17b, 17c is increased.

As a result, the tensile load and the compressive load, which generated at the reverse flanges 17a, 17b, 17c by the bending load of the lower arm 11, can be reduced to thereby increase the durability of the lower arm 11.

Since a main body of the lower arm 11 described above can be produced by pressing a steel plate, the lower arm is not only small in size and light in weight but also provides for superior productivity, and therefore it is also low in production cost.

Moreover, the lower arm 11 can provide for rigidity equal to that of a lower arm made through forging. In addition, a stabilizer may be disposed by making use of the upper space above the third horizontal wall portion 19 which is recessed downwardly from the first horizontal wall portion 15.

Thus, while the embodiment of the invention has been described in detail heretofore, the invention may be modified in design variously without departing from a scope of the invention.

For example, while the invention is applied to the lower arm in the embodiment, the invention may be applied to an upper arm. In addition, while the distal ends of the reverse flanges 17a, 17b, 17c are left apart from the third horizontal wall portion 19 in the embodiment, the distal ends of those reverse flanges may be brought into contact with the third horizontal wall portion 19 to form a pipe-like configuration.

Thus, according to the first aspect of the invention, in the suspension arm comprising the first horizontal wall portion, the perpendicular wall portions and the reverse flanges, the height of a bending center for vertical bending load is raised by providing the second horizontal wall portion which projects upwardly from the first horizontal wall portion so that a distance from the bending center to the reverse flanges is increased, whereby tensile load and compressive load acting on the reverse flanges can be reduced, thereby making it possible to increase the durability of the reverse flanges even if the thickness of the material is reduced due to the large elongation thereof at the time of pressing the material to form the reverse flanges.

According to the second aspect of the invention, in the suspension arm comprising the first horizontal wall portion, the perpendicular wall portions and the reverse flanges, the height of a bending center for vertical bending load is raised by providing the second horizontal wall portion which projects upwardly from the first horizontal wall portion in the vicinity of the first vehicle body mounting portion to which the largest bending load is applied so that a distance from the bending center to the reverse flanges is increased, whereby tensile load and compressive load acting on the reverse flanges can be reduced, thereby making it possible to increase the durability of the reverse flanges even if the thickness of the material is reduced due to the large elongation thereof at the time of pressing the material to form.the reverse flanges.

According to the third aspect of the invention, in the suspension arm comprising the first horizontal wall portion, the perpendicular wall portions and the reverse flanges, the height of a bending center for vertical bending load is raised by providing the second horizontal wall portion which projects upwardly from the first horizontal wall portion so that a distance from the bending center to the reverse flanges is increased, whereby tensile load and compressive load acting on the reverse flanges can be reduced, thereby making it possible to increase the durability of the reverse flanges even if the thickness of the material is reduced due to the large elongation thereof at the time of pressing the material to form the reverse flanges Moreover, since the third horizontal wall portion is provided in such a manner as to project downwardly from the first horizontal wall portion at the portion where the second horizontal wall portion does not exist, the bending center of the suspension arm is allowed to approach the thickness-wise center of the suspension arm so that the cross-sectional configuration of the suspension arm is not deformed by load acting within the plane of the suspension arm, whereby the secondary generation of internal stress can be prevented.

A lower arm 11 for an automobile which is formed by pressing a metallic plate comprises a first horizontal wall portion 15 extending horizontally when attached to a vehicle body, perpendicular wall portions 16a, 16b formed by bending downwardly peripheral edges of the first horizontal wall portion 15, reverse flanges 17a, 17b, 17c formed by bending inwardly lower edges of the perpendicular wall portions 16a, 16b and a second horizontal wall portion 20 provided in the vicinity of a vehicle body mounting portion 13 in order to project upwardly from the first horizontal wall portion 15. The height of a center of bending for vertical bending load is raised higher by the formation of the second horizontal wall portion 20 so that a distance from the center of bending to the reverse flanges 17a, 17b, 17c is increased, whereby tensile load and compressive load acting on the reverse flanges 17a, 17b, 17c is reduced.

## Claims

1. Suspension arm made of a pressed metallic plate, comprising:
a wheel mounting portion (12) to which a wheel is mounted,
a first vehicle body mounting portion (13) provided transversely inwardly of the wheel mounting portion (12); and
a second vehicle body mounting portion (14) provided at a position longitudinally apart from the first vehicle body mounting portion (13),
wherein said suspension arm (11) is provided with:
perpendicular wall portions (16a, 16b) extending from said wheel mounting portion (12) to said first vehicle body mounting portion (13) and to said second vehicle body mounting portion (14), respectively, as well as from said second vehicle body mounting portion (14) to said first vehicle body mounting portion (13),
a reverse flange (17a, 17b, 17c) formed by bending a lower edge of said perpendicular wall portions (16a, 16b) inwardly, and
a first (15), a second (20), and a third horizontal wall portion (19) located essentially between said perpendicular wall portions (16a, 16b),
wherein said first horizontal wall portion (15) consecutively adjoins said perpendicular wall portions (16a, 16b), all orientations mentioned referring to a mounted state, when said suspension arm (11) is attached to a vehicle body,
**characterized in that**
said second horizontal wall portion (20) lies surroundedly within said first horizontal wall portion (15), adjoins said first horizontal wall portion (15), and projects upwardly therefrom, and further **in that** said third horizontal wall portion (19), in a cross-sectional view of said suspension arm (11) is formed in a central portion of said first horizontal wall portion (15), adjoins said first horizontal wall portion (15) and projects downwardly therefrom.

2. The suspension arm according to claim 1,
**characterized in that** the third horizontal portion wall (19) is positioned vertically substantially in the middle between the first horizontal wall portion (15) and the reverse flanges (17a, 17b, 17c).

3. The suspension arm according to claim 1 or 2,
**characterized in that** the third horizontal wall portion (19), as viewed from the top, is curved in an arc-like fashion.

## Patentansprüche

1. Aufhängungsarm, hergestellt aus einer gepressten Metallplatte, umfassend:
einen Radanbringungsabschnitt (12), an welchen ein Rad montiert ist,
einen ersten Fahrzeugkörper-Anbringungsabschnitt (13), welcher in Querrichtung einwärts des Radanbringungsabschnitts (12) vorgesehen ist, sowie
einen zweiten Fahrzeugkörper-Anbringungsabschnitt (14), welcher an einer in Längsrichtung von dem ersten Fahrzeugkörper-Anbringungsabschnitt (13) entfernt gelegenen Position vorgesehen ist,
wobei der Aufhängungsarm (11) versehen ist mit:
orthogonalen Wandabschnitten (16a, 16b) welche von dem Radanbringungsabschnitt (12) zu dem ersten Fahrzeugkörper-Anbringungsabschnitt (13) bzw. zu dem zweiten Fahrzeugkörper-Anbringungsabschnitt (14) ebenso wie von dem zweiten Fahrzeugkörper-Anbringungsabschnitt (14) zu dem ersten Fahrzeugkörper-Anbringungsabschnitt (13) verlaufen,
einen Umkehrflansch (17a, 17b, 17c), welcher gebildet ist durch Biegen eines unteren Randes der orthogonalen Wandabschnitte (16a, 16b) nach innen, und
einen ersten (15), einen zweiten (20) und einen dritten horizontalen Wandabschnitt (19), welche im Wesentlichen zwischen den orthogonalen Wandabschnitten (16a, 16b) gelegen sind,
wobei der erste horizontale Wandabschnitt (15) der Reihe nach an die orthogonalen Wandabschnitte (16a, 16b) angrenzt, wobei alle genannten Orientierungen sich auf einen montierten Zustand beziehen, wenn der Aufhängungsarm (11) an einem Fahrzeugkörper angebracht ist,
**dadurch gekennzeichnet, dass**
der zweite horizontale Wandabschnitt (20) umgeben in dem ersten horizontalen Wandabschnitt (15) liegt, an den ersten horizontalen Wandabschnitt (15) angrenzt und von diesem nach oben vorragt, sowie weiter **dadurch**, dass der dritte horizontale Wandabschnitt (19), in einer Querschnittsansicht des Aufhängungsarms (11), in einem zentralen Abschnitt des ersten horizontalen Wandabschnitts (15) ausgebildet ist, an den ersten horizontalen Wandabschnitt (15) angrenzt und von diesem nach unten vorragt.

2. Aufhängungsarm nach Anspruch 1,
**dadurch gekennzeichnet, dass** der dritte horizontale Wandabschnitt (19) in vertikaler Richtung im Wesentlichen in der Mitte zwischen dem ersten horizontalen Wandabschnitt (15) und den Umkehrflanschen (17a, 17b, 17c) positioniert ist.

3. Aufhängungsarm nach Anspruch 1 oder 2,
**dadurch gekennzeichnet, dass** der dritte horizontale Wandabschnitt (19), bei Betrachtung von oben, bogenartig gekrümmt ist.

## Revendications

1. Bras de suspension produit à partir d'une plaque métallique pressée, comprenant :
une portion de montage de roue (12) sur laquelle est montée une roue,
une première portion de montage de corps de véhicule (13) prévue transversalement vers l'intérieur de la portion de montage de roue (12), et
une seconde portion de montage de corps de véhicule (14) prévue à une position longitudinalement espacée de la première portion de montage de corps de véhicule (13),
ledit bras de suspension (11) étant pourvu :
de portions de parois perpendiculaires (16a, 16b) s'étendant depuis ladite portion de montage de roue (12) vers ladite première portion de montage de corps de véhicule (13) et vers ladite seconde portion de montage de corps de véhicule (14), respectivement, ainsi que depuis ladite seconde portion de montage de corps de véhicule (14) vers ladite première portion de montage de corps de véhicule (13),
d'une bride inversée (17a, 17b, 17c) formée en pliant vers l'intérieur un bord inférieur desdites portions de parois perpendiculaires (16a, 16b), et
d'une première (15), d'une seconde (20) et d'une troisième (19) portion de paroi horizontales situées essentiellement entre lesdites portions de parois perpendiculaires (16a, 16b),
dans lesquelles ladite première portion de paroi horizontale (15) joint consécutivement lesdites portions de parois perpendiculaires (16a, 16b), toutes les orientations mentionnées se référant à une situation montée, lorsque ledit bras de suspension (11) est attaché à un corps de véhicule,
**caractérisé en ce que**
ladite seconde portion de paroi horizontale (20) est située de manière à être entourée à l'intérieur de ladite première portion de paroi horizontale (15), en joignant ladite première portion de paroi horizontale (15) et en se projetant vers le haut depuis celle-ci, et en outre **en ce que** ladite troisième portion de paroi horizontale (19), dans une vue en section transversale dudit bras de suspension (11), est formée dans une portion centrale de ladite première portion de paroi horizontale (15), en joignant ladite première portion de paroi horizontale (15) et en se projetant vers le bas depuis celle-ci.

2. Bras de suspension selon la revendication 1,
**caractérisé en ce que** la troisième portion de paroi horizontale (19) est positionnée verticalement sensiblement au milieu entre la première portion de paroi horizontale (15) et les brides inversées (17a, 17b, 17c).

3. Bras de suspension selon la revendication 1 ou 2,
**caractérisé en ce que** la troisième portion de paroi horizontale (19), telle que vue depuis le dessus, est incurvée d'une façon analogue à un arc.
